# EUROPEAN PATENT SPECIFICATION

(11) **EP 2 487 879 B1**
(45) Date of publication and mention of the grant of the patent: **05.12.2018**
(21) Application number: 11152754.5
(22) Date of filing: 31.01.2011
(51) Int. Cl.: H04M 1/725, H04M 1/04, H04M 1/73

(54) **Mobile device having enhanced in-holder power saving features and related methods**
Mobile Vorrichtung mit erweiterten haltereigene Stromsparmerkmalen und zugehöriges Verfahren
Dispositif mobile doté de propriétés améliorées d'économie d'énergie sur support et procédés correspondants

(43) Date of publication of application: 15.08.2012
(73) Proprietor: BlackBerry Limited, Waterloo, ON N2K 0A7 (CA)
(72) Inventor: Moosavi, Vahid, Waterloo Ontario N2L 3W8 (CA); Rose, Scott Douglas, Waterloo Ontario N2L 3W8 (CA); Kezys, Vytautas Roberts, Waterloo Ontario N2L 3W8 (CA)
(74) Representative: Roberts, Gwilym Vaughan

(56) References cited:
- EP-A1- 1 959 332

## Description

### Technical Field

This application relates to the field of communications, and more particularly, to electronic devices and related methods that use near-field communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters.

EP 1959332 discloses a system and method for providing improved detection of user inaction. A mobile device, such as through the use of an NFC sub-system, may determine holster-proximity information, i.e., whether the mobile device is near to (including in) a holster or out of, and away from, the holster. The holster-proximity information may be used by the mobile device to enter into a user-inactive mode. Such entry into a user-inactive mode may involve disabling user interface components, such as input devices and output devices. In particular, the holster-proximity information may be used by the mobile device to disable the keyboard, that is, prevent presses on keys in the keyboard from being recorded. Such disabling may be considered of particular importance when the mobile device is going into and coming out of the holster.

### Brief Description of the Drawings

FIG. 1 is a schematic block diagram of a communications system in accordance with one example aspect.
FIG. 2 is a schematic block diagram of an alternative embodiment of the mobile device of the system illustrated in FIG. 1.
FIG. 3 and 4 are flow diagrams illustrating method aspects associated with the system of FIG. 1 and mobile device of FIG. 2.
FIG. 5 is a schematic diagram illustrating example components that may be used with the mobile devices of FIGS. 1 or 2.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

The invention is set out in the appended set of claims. The embodiments and/or clauses and/or examples of the following description which are not covered by the appended claims are considered as not being part of the present invention.

Generally speaking, a communications system is disclosed herein which may include a mobile device holder, a first near-field communication (NFC) device carried by the mobile device holder, and a mobile device. The mobile device may include a portable housing configured to be removably positioned within the mobile device holder, a second NFC device carried by the portable housing and configured to communicate with the first NFC device via NFC communications, and a controller carried by the portable housing and coupled to the second NFC device. The controller may be configured to operate the second NFC device to scan for the first NFC device in a first mode when the portable housing is removed from the mobile device holder, and operate the second NFC device in a second mode based upon communication with the first NFC device when the portable housing is positioned within the mobile device holder, where the second mode has a lower power consumption level associated therewith than the first mode. As such, the system may advantageously provide enhanced mobile device holder detection and power consumption features.

More particularly, the second NFC device may be configured to determine a magnetic field change while in the second mode. As such, the controller may be further configured to determine when the portable housing is removed from the mobile device holder based upon the determined magnetic field change. By way of example, the first NFC device may comprise a passive NFC device. Also by way of example, the first mode may comprise a low power card emulation mode, and the second NFC device may draw a current in a range of 4-5 mA when operated in the first mode. By way of comparison, the second mode may comprise a low power tag detection mode, and the second NFC device may draw a current in a range of 15-150 µA when operated in the second mode, for example.

The mobile device may further include at least one input device carried by the portable housing and coupled to the controller that is switchable between active and inactive states. Accordingly, the controller may be further configured to switch the at least one input device to the active state when the second NFC device is in the first mode, and to the inactive state when the second NFC device is in the second mode. Additionally, the mobile device may further include a wireless transceiver coupled to the controller and configured to communicate via a wireless communications network.

A related mobile device, such as the one described briefly above, and a related method for operating such a mobile device are also provided. The method may include operating the second NFC device to scan for the first NFC device in a first mode when the portable housing is removed from the mobile device holder, and operating the second NFC device in a second mode based upon communication with the first NFC device when the portable housing is positioned within the mobile device holder, wherein the second mode has a lower power consumption level associated therewith than the first mode.

A related non-transitory computer-readable medium is for a mobile device, such as the one described briefly above. The computer-readable medium may have computer-executable instructions for causing the mobile device to perform steps including operating the second NFC device to scan for the first NFC device in a first mode when the portable housing is removed from the mobile device holder, and operating the second NFC device in a second mode based upon communication with the first NFC device when the portable housing is positioned within the mobile device holder. Here again, the second mode may have a lower power consumption level associated therewith than the first mode.

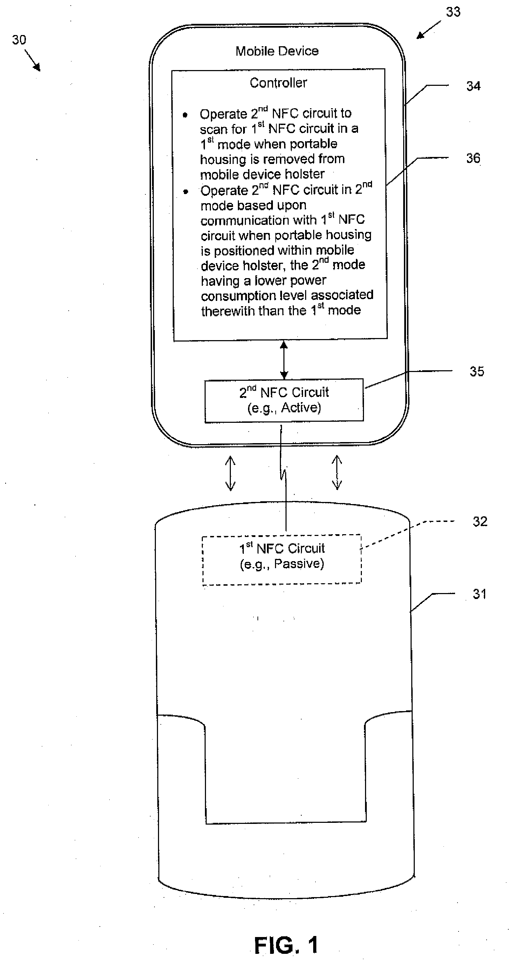

Referring initially to FIG. 1, a communications system **30** is first described. The system **30** illustratively includes a holder **31** for a mobile device **33,** and a first near-field communication (NFC) device **32** carried by the mobile device holder **31.** The mobile device **33** illustratively includes a portable housing **34** configured to be removably positioned within or carried by the mobile device holder **31,** as indicated by the arrows in FIG. 1. By way of example, the mobile device 33 may be a portable or mobile telephone or smartphone, and the mobile device holder **31** may be configured for attachment (via a clip, etc.) to a user's belt or clothing to provide a convenient way to carry the phone, such as a holster. In another example implementation, the mobile device holder **31** may be configured for use within an automobile (e.g., on a dashboard, air conditioner vent, etc.) to secure the mobile device **33** while driving or riding, on a desk or counter top (e.g., in a cradle configuration), etc. However, it should be noted that the mobile device holder **31** may be otherwise carried or mounted, and may be used with other types of mobile devices such as portable or personal media players (e.g., MP3 players, video players, etc.), remote controls (e.g., television or stereo remotes, etc.), portable gaming devices, etc., for example.

The mobile device **33** further illustratively includes a second NFC circuit **35** carried by the portable housing **34** and configured to communicate with the first NFC circuit **32** via NFC communications, and a controller **36** carried by the portable housing and coupled to the second NFC circuit **35.** By way of example, the controller **36** may be implemented using a combination of hardware (e.g., microprocessor, etc.) and non-transitory computer-readable medium components, as will be discussed further below.

NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used. By way of example, the first NFC circuit **32** may be operable as a passive NFC tag, and the second NFC circuit **35** may be operable as an active NFC reader, for example.

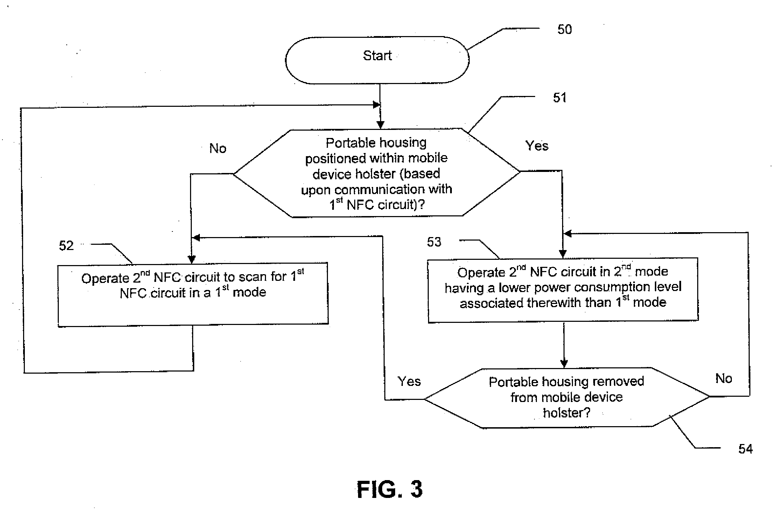

Turning additionally to FIG. 3, beginning at Block **50,** the controller **36** is configured to operate the second NFC circuit **35** to scan for the first NFC circuit **32** in a first mode when the portable housing **34** is removed from or otherwise not in proximity with the mobile device holder **31,** at Blocks **51-52.** By way of example, the first NFC circuit **32** may have a standard or generic identification associated therewith which generally identifies it as a mobile device holder (similar to a UPC code). Alternatively, the first NFC circuit **32** may have a unique identification associated therewith that is stored by the controller **36** and recognized as a respective paired holder for the mobile device **33.** Moreover, the controller **36** is further configured to operate the second NFC circuit **35** in a second mode based upon communication with the first NFC circuit **32** when the portable housing **34** is positioned within the mobile device holder **31,** at Block **54,** and returns to the first mode upon being removed from the mobile device holder **31,** at Block **52.** In particular, the second mode has a lower power consumption level associated therewith than the first mode.

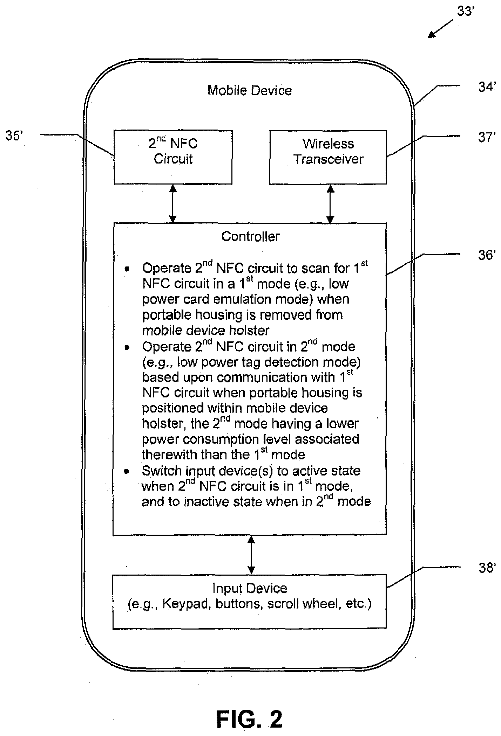

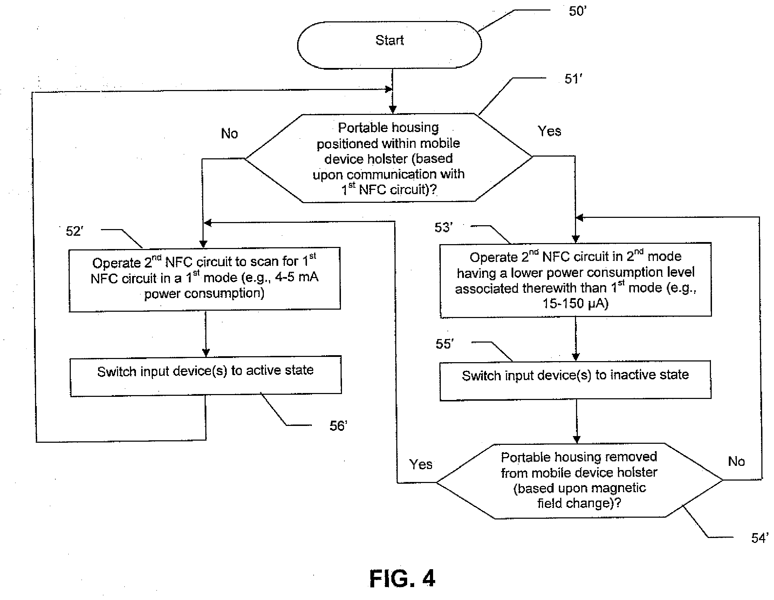

Referring more particularly to FIGS. 2 and 4, the example mobile device **33'** further illustratively includes a wireless transceiver **37'** (e.g., cellular, wireless local area network (WLAN), WiMAX, etc.), and one or more input devices **38'** carried by the portable housing **34'** and coupled to the controller **36'.** By way of example, the input device(s) **38'** may comprise one or more input keys (e.g., a keypad or keyboard), a track pad, scroll wheel, track ball, convenience keys or buttons, touch screen, etc.

In an example implementation, the first mode in which the second NFC circuit **35'** operates may comprise an NFC low power card emulation mode. This mode is "low power" as compared to a continuous active NFC state, wherein the second NFC circuit **35'** would continuously generate electromagnetic carrier field pulses to detect the presence of another NFC circuit, such as the passive first NFC circuit **32.** However, in the low power card emulation mode, the second NFC circuit **35'** may still cycle to an active NFC state at a given frequency, and therefore may typically have a power consumption (e.g., current draw) on the order of a few milliamps of current per second (e.g., approximately 4-5 mA per second). While this power consumption might be acceptable when the mobile device **33'** is in use, it may be undesirably high when the mobile device **33'** is within the mobile device holder **31,** since the likelihood of scanning for other NFC devices would be low in such instances.

The second mode in which the second NFC device **35'** operates may comprise an NFC low power tag detection mode. By way of comparison, in an NFC low power tag detection mode, the second NFC device **35'** may advantageously send out electromagnetic carrier field pulses, but of a relatively shorter duration than in the low power card emulation mode, to detect a magnetic field change. That is, rather than continuing to engage in near-field communication with the first NFC device **32,** which would require longer duration active mode pulses, the second NFC device **35'** instead emits the shorter pulses for the purpose of determining when it has been moved with respect to one or more conductors (e.g., metals) in its vicinity. That is, the metal, etc. present in the first NFC device **32,** mobile device holder **31,** etc., will result in a given magnetic field measurement or reading by the second NFC device **35'** when it emits the short pulses. Yet, when the position of the second NFC device **35'** is moved relative to the surrounding conductor(s), then the given measurement will change. So, for example, if this measurement changes beyond a threshold level, then the controller **36'** will determine that the mobile device **30'** has been removed from the mobile device holder **31.**

In the second mode (e.g., low power tag detection mode), the second NFC device **35'** may have a significantly lower power consumption than when operating in the first mode. For example, in a low power tag detection mode, the second NFC device **35'** may have a power consumption (e.g., current draw) in the microamp per second range (e.g., approximately 15-150 µA).

While the second NFC device **35'** is in the second operating mode (i.e., meaning the portable housing **34'** is in the mobile device holder **31**), it may also be desirable to switch the input device **38'** to an inactive state to provide further power savings (e.g., disable keypad, etc.), or to prevent an inadvertent input while in the holder, at Block **55'.** When the controller **36'** determines that the portable housing **34'** has been removed from the mobile device holder **31** (Block **54'**), as discussed above, then the second NFC device **35'** is switched back to the first operating mode (e.g., low power card emulation mode), at Block **52',** and the input device **38'** may also be switched back to an active state, at Block **56'** (e.g., enable keypad, etc.). Output devices (e.g., display, etc.) may similarly be selectively enabled or disabled during active or inactive operating modes, in some embodiments.

A related non-transitory computer-readable medium is also provided for the mobile device **33.** The computer-readable medium may have computer-executable instructions for causing the mobile device **33** to perform steps including operating the second NFC device **35** to scan for the first NFC device **32** in a first mode when the portable housing **34** is removed from the mobile device holder **31,** and operating the second NFC device in a second mode based upon communication with the first NFC device when the portable housing **34** is positioned within the mobile device holder **31.** The second mode may have a lower power consumption level associated therewith than the first mode, as discussed further above.

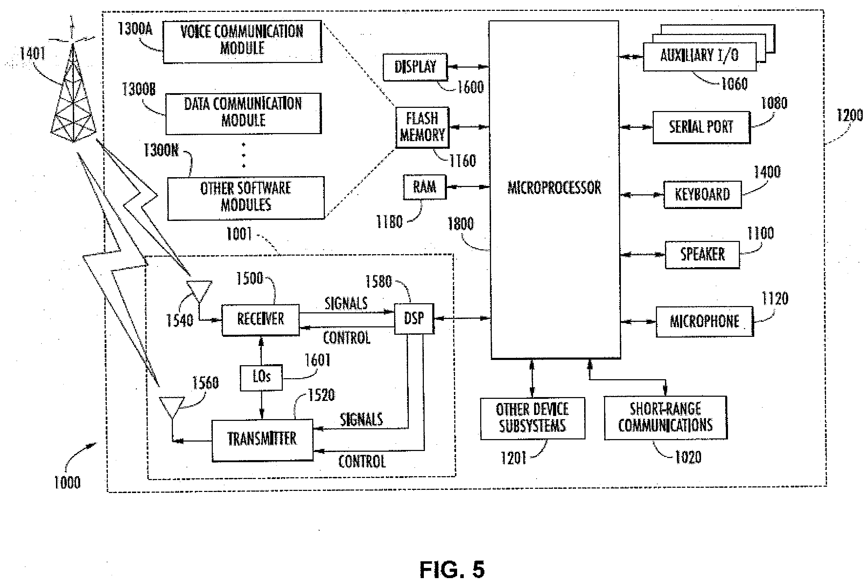

Example components of a mobile wireless communications device **1000** that may be used in accordance with the above-described embodiments are further described below with reference to FIG. 5. The device **1000** illustratively includes a housing **1200,** a keypad or keyboard **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** For example, a power mode switching application may be used for controlling switching between different power consumption modes. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, NFC or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communications system (30) comprising:
a holder (31);
a first near-field communication, NFC, device carried by said holder (32); and
a mobile device (33) comprising
a housing (34) configured to be removably positioned within said holder,
a second NFC device (35) carried by said housing and configured to communicate with said first NFC device via NFC communications, and
a controller (36) carried by said housing and coupled to said second NFC device and configured to
operate said second NFC device to scan for said first NFC device in a first mode using electromagnetic, EM, carrier field pulses of a first duration when said housing is removed from said holder, and
to operate said second NFC device in a second mode using EM carrier field pulses of a second duration shorter than the first duration based upon communication with said first NFC device when said housing is positioned within said holder, the second mode having a lower power consumption level associated therewith than the first mode.

2. The communications system (30) of Claim 1 wherein said second NFC device (35) is configured to determine a magnetic field change while in the second mode; and wherein said controller (36) is further configured to determine when said housing (34) is removed from said holder (32) based upon the determined magnetic field change.

3. The communications system (30) of Claim 1 wherein said first NFC device (32) comprises a passive NFC device.

4. The communications system (30) of Claim 1 wherein the first mode comprises a low power card emulation mode.

5. The communications system (30) of Claim 1 wherein said second NFC device (35) is configured to draw a current in a range of 4-5 mA when operated in the first mode.

6. The communications system (30) of Claim 1 wherein the second mode comprises a low power tag detection mode.

7. The communications system (30) of Claim 1 wherein said second NFC device (35) is configured to draw a current in a range of 15-150 µA when operated in the second mode.

8. The communications system (30) of Claim 1 wherein said mobile device (33') further comprises at least one input device (38') carried by said housing (34') and coupled to said controller (36') and switchable between active and inactive states; and wherein said controller is further configured to switch said at least one input device to the active state when said second NFC device (35') is in the first mode, and to the inactive state when said second NFC device is in the second mode.

9. The communications system (30) of Claim 1 wherein said mobile device (33') further comprises a wireless transceiver (37') coupled to said controller (36').

10. A method for operating a mobile device (33) comprising a housing (34) configured to be removably positioned within a holder (31) carrying a first near-field communication, NFC, device (32), and a second NFC device (35) carried by the housing and configured to communicate with the first NFC device via NFC communications, the method comprising:
operating the second NFC device to scan for the first NFC device in a first mode using electromagnetic, EM, carrier field pulses of a first duration when the housing is removed from the holder; and
operating the second NFC device in a second mode using EM carrier field pulses of a second duration shorter than the first duration based upon communication with the first NFC device when the housing is positioned within the holder, the second mode having a lower power consumption level associated therewith than the first mode.

11. The method of Claim 10 wherein the second NFC device (35) is configured to determine a magnetic field change while in the second mode; and further comprising determining when the housing (34) is removed from the holder based upon the determined magnetic field change.

12. The method of Claim 10 wherein the first mode comprises a low power card emulation mode, and wherein the second mode comprises a low power tag detection mode.

13. The method of Claim 10 wherein the mobile device (34') further comprises at least one input device (38') carried by the housing (34') and coupled to the controller (36') and switchable between active and inactive states; and further comprising switching the at least one input device to the active state when the second NFC device (35') is in the first mode, and to the inactive state when the second NFC device is in the second mode.

## Patentansprüche

1. Kommunikationssystem (30), enthaltend:
eine Halterung (31);
eine von der Halterung (32) getragene erste Nahfeld-Kommunikationseinrichtung (NFC); und
ein Mobilgerät (33), enthaltend
ein Gehäuse (34), das dafür konfiguriert ist, abnehmbar in der Halterung positioniert zu werden,
eine zweite NFC-Einrichtung (35), die von dem Gehäuse getragen wird und dafür konfiguriert ist, mit der ersten NFC-Einrichtung über NFC-Kommunikation zu kommunizieren, und
eine Steuereinrichtung (36), die von dem Gehäuse getragen wird und mit der zweiten NFC-Einrichtung gekoppelt ist und dafür konfiguriert ist,
die zweite NFC-Einrichtung zu betätigen, um in einem ersten Modus nach der ersten NFC-Einrichtung unter Verwendung von elektromagnetischen (EM) Trägerfeldimpulsen einer ersten Dauer zu suchen, wenn das Gehäuse aus der Halterung entfernt wird, und
die zweite NFC-Einrichtung in einem zweiten Modus unter Verwendung von EM- Trägerfeldimpulsen einer zweiten Dauer, die kürzer ist als die erste Dauer, auf der Grundlage der Kommunikation mit der ersten NFC-Einrichtung zu betätigen, wenn das Gehäuse innerhalb der Halterung positioniert ist, wobei der zweite Modus einen damit verbundenen niedrigeren Leistungsverbrauchspegel als der erste Modus hat.

2. Kommunikationssystem (30) nach Anspruch 1, wobei die zweite NFC-Einrichtung (35) dafür konfiguriert ist, eine Veränderung des Magnetfelds zu ermitteln, während sie in dem zweiten Modus ist; und wobei die Steuereinrichtung (36) ferner dafür konfiguriert ist, basierend auf der ermittelten Magnetfeldveränderung zu ermitteln, wann das Gehäuse (34) aus der Halterung (32) entfernt wird.

3. Kommunikationssystem (30) nach Anspruch 1, wobei die erste NFC-Einrichtung (32) eine passive NFC-Einrichtung umfasst.

4. Kommunikationssystem (30) nach Anspruch 1, wobei der erste Modus einen Karten-Emulationsmodus niedriger Leistung umfasst.

5. Kommunikationssystem (30) nach Anspruch 1, wobei die zweite NFC-Einrichtung (35) dafür konfiguriert ist, beim Betrieb in dem ersten Modus einen Strom im Bereich von 4-5 mA zu ziehen.

6. Kommunikationssystem (30) nach Anspruch 1, wobei der zweite Modus einen Tag-Erfassungsmodus niedriger Leistung umfasst.

7. Kommunikationssystem (30) nach Anspruch 1, wobei die zweite NFC-Einrichtung (35) dafür konfiguriert ist, im Betrieb in dem zweiten Modus einen Strom in einem Bereich von 15-150 µA zu ziehen.

8. Kommunikationssystem (30) nach Anspruch 1, wobei das Mobilgerät (33') ferner mindestens eine Eingabeeinrichtung (38') aufweist, die von dem Gehäuse (34') getragen ist und mit der Steuereinrichtung (36') gekoppelt ist und zwischen einem aktiven und einem inaktiven Zustand umschaltbar ist; und wobei die Steuereinrichtung ferner dafür konfiguriert ist, die mindestens eine Eingabeeinrichtung in den aktiven Zustand umzuschalten, wenn die zweite NFC-Einrichtung (35') in dem ersten Modus ist, und in den inaktiven Zustand, wenn die zweite NFC-Einrichtung in dem zweiten Modus ist.

9. Kommunikationssystem (30) nach Anspruch 1, wobei das Mobilgerät (33') ferner einen mit der Steuereinrichtung (36') gekoppelten drahtlosen Transceiver (37') aufweist.

10. Verfahren für den Betrieb eines Mobilgeräts (33), das ein Gehäuse (34) enthält, das dafür konfiguriert ist, dass es innerhalb einer Halterung (31) entfernbar positioniert wird, welche eine erste Nahfeld-Kommunikationseinrichtung (NFC) (32) trägt, und eine zweite NFC-Einrichtung (35), die von dem Gehäuse getragen wird und dafür konfiguriert ist, mit der ersten NFC-Einrichtung über NFC-Kommunikation zu kommunizieren, wobei das Verfahren enthält:
Betätigen der zweiten NFC-Einrichtung in einem ersten Modus unter Verwendung von elektromagnetischen (EM) Trägerfeldimpulsen einer ersten Dauer, um nach der ersten NFC-Einrichtung zu suchen, wenn das Gehäuse aus der Halterung entfernt wird; und
Betätigen der zweiten NFC-Einrichtung in einem zweiten Modus unter Verwendung von EM-Trägerfeldimpulsen einer zweiten Dauer, die kürzer ist als die erste Dauer, auf der Grundlage der Kommunikation mit der ersten NFC-Einrichtung, wenn das Gehäuse in der Halterung positioniert ist, wobei der zweite Modus einen damit verbundenen niedrigeren Leistungsverbrauchspegel als der erste Modus hat.

11. Verfahren nach Anspruch 10, wobei die zweite NFC-Einrichtung (35) dafür konfiguriert ist, eine Veränderung eines Magnetfelds zu ermitteln, während sie in dem zweiten Modus ist; und ferner enthaltend das Ermitteln, wann das Gehäuse (34) aus der Halterung entfernt wird, auf der Grundlage der ermittelten Veränderung des Magnetfelds.

12. Verfahren nach Anspruch 10, wobei der erste Modus einen Karten-Emulationsmodus niedriger Leistung umfasst und wobei der zweite Modus einen Tag-Erfassungsmodus niedriger Leistung umfasst.

13. Verfahren nach Anspruch 10, wobei das Mobilgerät (34') ferner mindestens eine Eingabeeinrichtung (38') aufweist, die von dem Gehäuse (34') getragen wird und mit der Steuereinrichtung (36') gekoppelt ist und zwischen dem aktiven und dem inaktiven Zustand umschaltbar ist; und ferner enthaltend das Umschalten der mindestens einen Eingabeeinrichtung in den aktiven Zustand, wenn die zweite NFC-Einrichtung (35') in dem ersten Modus ist, und in den inaktiven Zustand, wenn die zweite NFC-Einrichtung in dem zweiten Modus ist.

## Revendications

1. Système de communication (30) comprenant :
un support (31) ;
un premier dispositif de communication en champ proche, NFC, porté par ledit support (32) ; et
un dispositif mobile (33) comprenant :
un logement (34) configuré pour être positionné de manière amovible dans ledit support,
un deuxième dispositif NFC (35) porté par ledit logement et configuré pour communiquer avec ledit premier dispositif NFC par l'intermédiaire de communications NFC, et
un contrôleur (36) porté par ledit logement et couplé audit deuxième dispositif NFC et configuré pour
mettre en oeuvre ledit deuxième dispositif NFC pour rechercher ledit premier dispositif NFC dans un premier mode en utilisant des impulsions de champ de porteuse électromagnétique, EM, d'une première durée lorsque ledit logement est retiré dudit support, et
mettre en oeuvre ledit deuxième dispositif NFC dans un deuxième mode en utilisant des impulsions de champ de porteuse EM d'une deuxième durée plus courte que la première durée sur la base d'une communication avec ledit premier dispositif NFC lorsque ledit logement est positionné dans ledit support, le deuxième mode ayant un plus faible niveau de consommation de puissance associé à celui-ci que le premier mode.

2. Système de communication (30) selon la revendication 1, dans lequel ledit deuxième dispositif NFC (35) est configuré pour déterminer un changement de champ magnétique alors qu'il est dans le deuxième mode; et dans lequel ledit contrôleur (36) est en outre configuré pour déterminer quand ledit logement (34) est retiré dudit support (32) sur la base du changement de champ magnétique déterminé.

3. Système de communication (30) selon la revendication 1, dans lequel ledit premier dispositif NFC (32) comprend un dispositif NFC passif.

4. Système de communication (30) selon la revendication 1, dans lequel le premier mode comprend un mode d'émulation de carte de faible puissance.

5. Système de communication (30) selon la revendication 1, dans lequel ledit deuxième dispositif NFC (35) est configuré pour consommer un courant dans une plage de 4 à 5 mA lorsqu'il est mis en oeuvre dans le premier mode.

6. Système de communication (30) selon la revendication 1, dans lequel le deuxième mode comprend un mode de détection d'étiquette de faible puissance.

7. Système de communication (30) selon la revendication 1, dans lequel ledit deuxième dispositif NFC (35) est configuré pour consommer un courant dans une plage de 15 à 150 µA lorsqu'il est mis en oeuvre dans le deuxième mode.

8. Système de communication (30) selon la revendication 1, dans lequel ledit dispositif mobile (33') comprend en outre au moins un dispositif d'entrée (38') porté par ledit logement (34') et couplé audit contrôleur (36') et pouvant être commuté entre des états actif et inactif ; et dans lequel ledit contrôleur est en outre configuré pour commuter ledit au moins un dispositif d'entrée vers l'état actif lorsque ledit deuxième dispositif NFC (35') est dans le premier mode, et vers l'état inactif lorsque ledit deuxième dispositif NFC est dans le deuxième mode.

9. Système de communication (30) selon la revendication 1, dans lequel ledit dispositif mobile (33') comprend en outre un émetteur-récepteur sans fil (37') couplé audit contrôleur (36').

10. Procédé pour mettre en oeuvre un dispositif mobile (33) comprenant un logement (34) configuré pour être positionné de manière amovible dans un support (31) portant un premier dispositif de communication en champ proche, NFC, (32), et un deuxième dispositif NFC (35) porté par le logement et configuré pour communiquer avec le premier dispositif NFC par l'intermédiaire de communications NFC, le procédé comprenant :
la mise en oeuvre du deuxième dispositif NFC pour rechercher le premier dispositif NFC dans un premier mode en utilisant des impulsions de champ de porteuse électromagnétique, EM, d'une première durée lorsque le logement est retiré du support ; et
la mise en oeuvre du deuxième dispositif NFC dans un deuxième mode en utilisant des impulsions de champ de porteuse EM d'une deuxième durée plus courte que la première durée sur la base d'une communication avec le premier dispositif NFC lorsque le logement est positionné dans le support, le deuxième mode ayant un plus faible niveau de consommation de puissance associé à celui-ci que le premier mode.

11. Procédé selon la revendication 10, dans lequel le deuxième dispositif NFC (35) est configuré pour déterminer un changement de champ magnétique alors qu'il est dans le deuxième mode; et comprenant en outre la détermination de l'instant auquel le logement (34) est retiré du support sur la base du changement de champ magnétique déterminé.

12. Procédé selon la revendication 10, dans lequel le premier mode comprend un mode d'émulation de carte de faible puissance, et dans lequel le deuxième mode comprend un mode de détection d'étiquette de faible puissance.

13. Procédé selon la revendication 10, dans lequel le dispositif mobile (34') comprend en outre au moins un dispositif d'entrée (38') porté par le logement (34') et couplé au contrôleur (36') et pouvant être commuté entre des états actif et inactif ; et comprenant en outre la commutation dudit au moins un dispositif d'entrée vers l'état actif lorsque le deuxième dispositif NFC (35') est dans le premier mode, et vers l'état inactif lorsque le deuxième dispositif NFC est dans le deuxième mode.
